# EUROPÄISCHE PATENTSCHRIFT

(11) **EP 1 991 731 B1**
(45) Veröffentlichungstag und Bekanntmachung des Hinweises auf die Patenterteilung: **23.01.2013**
(21) Anmeldenummer: 07729641.6
(22) Anmeldetag: 30.05.2007
(51) Int. Cl.: D06F 39/02, F16L 33/22

(54) **BEFESTIGUNGSANORDNUNG FÜR EINE SCHLAUCHLEITUNG AN EINEM BAUTEIL EINES HAUSHALTSGERÄTS**
ARRANGEMENT FOR FASTENING A HOSE ON A COMPONENT OF A DOMESTIC APPLIANCE
AGENCEMENT DE FIXATION POUR UNE CONDUITE FLEXIBLE SUR UN COMPOSANT D'UN APPAREIL MÉNAGER

(30) Priorität: 12.06.2006 DE 102006027196
(43) Veröffentlichungstag der Anmeldung: 19.11.2008
(73) Patentinhaber: BSH Bosch und Siemens Hausgeräte GmbH, 81739 München (DE)
(72) Erfinder: BOLDUAN, Edwin, 13629 Berlin (DE); SABALAT, Andre, 10559 Berlin (DE)
(86) Internationale Anmeldenummer: PCT/EP2007/055222
(87) Internationale Veröffentlichungsnummer: WO 2007/144259

(56) Entgegenhaltungen:
- EP-A- 1 297 778
- EP-A- 1 568 815
- DE-A1- 3 404 293
- DE-A1- 10 116 832
- US-A- 5 823 580

## Beschreibung

Die Erfindung betrifft eine Befestigungsanordnung für eine Schlauchleitung an einem Bauteil eines Haushaltsgeräts der im Oberbegriff des Patentanspruchs 1 angegebenen Art. Eine solche Befestigungsanordnung ist zum Beispiel aus der DE 3 404 293 A1 bekannt.

Aus der EP 1 297 778 A2 ist ebenfalls eine derartige Befestigungsanordnung bekannt, bei der eine mit einem Ende an einer Umwälzpumpe einer Geschirrspülmaschine angeordnete Schlauchleitung mit ihrem anderen Ende auf einen als Flansch ausgebildeten Aufnahmestutzen eines Durchlauferhitzers aufgesteckt werden kann. Zur Festlegung bzw. Fixierung der auf den Flansch aufgesteckten Schlauchleitung ist auf der Seite des Durchlauferhitzers eine Muffe vorgesehen, welche die Schlauchleitung außenumfangsseitig umgibt. Über diese Muffe kann eine Schlauchklemme geschoben werden, mit welcher die Muffe bzw. die Schlauchleitung gegenüber dem Aufnahmestutzen zu fixieren und abzudichten ist.

Nachteilig bei dieser bekannten Befestigungsanordnung ist es, dass die Schlauchklemme auf relativ umständliche Weise außenumfangsseitig des Aufnahmestutzens angebracht und anschließend mit relativ hohem Montageaufwand an der Schlauchleitung festgelegt werden muss. Hierzu dient üblicherweise eine Schraube, über welche die beiden Enden der Schlauchklemme gegeneinander zu bewegen sind.

Aufgabe der vorliegenden Erfindung ist es daher, eine Befestigungsanordnung der eingangs genannten Art zu schaffen, mit der sich insbesondere eine einfachere Festlegung der Schlauchleitung am Aufnahmestutzen realisieren lässt.

Diese Aufgabe wird erfindungsgemäß durch eine Befestigungsanordnung mit den Merkmalen des Patentanspruchs 1 gelöst. Vorteilhafte der Erfindung sind in den übrigen Patentansprüchen angegeben.

Um den Montageaufwand der Schlauchleitung an dem Aufnahmestutzen zu reduzieren ist es erfindungsgemäß vorgesehen, dass eine der Schlauchleitung zugewandte Aufnahmeöffnung des Sicherungselements konisch ausgebildet ist und sich in Aufsteckrichtung der Schlauchleitung im Querschnitt verjüngt. Durch die sich konisch verjüngende Aufnahmeöffnung ist es somit auf einfache Weise möglich, die in diese eingeführte bzw. gegebenenfalls auch hindurchgeführte Schlauchleitung auf äußerst einfache und zuverlässige Weise derart gegenüber dem Aufnahmestutzen festzulegen, dass sich eine gleicherma-βen sichere und dichte Fixierung der Schlauchleitung am Aufnahmestutzen ergibt. In einer besonders vorteilhaften Ausführungsform ist dabei das Sicherungselement bereits vor dem Aufstecken der Schlauchleitung fest gegenüber dem Aufnahmestutzen angeordnet, so dass das Aufstecken der Schlauchleitung auf den Aufnahmestutzen gleichzeitig zu einer Fixierung der Schlauchleitung gegenüber diesem führt. In jedem Fall ist jedoch erkennbar, dass sich durch eine derart sich konisch verjüngende Aufnahmeöffnung eine äußerst schnelle und zuverlässige Fixierung bzw. Abdichtung der Schlauchleitung gegenüber dem Aufnahmestutzen realisieren lässt, ohne dass - im Unterschied zum Stand der Technik - ein weiteres Anziehen des Sicherungselements beispielsweise mittels einer Sicherungsschraube erforderlich wäre.

In weiterer Ausgestaltung der Erfindung hat es sich als fertigungstechnisch besonders einfach gezeigt, das Sicherungselement gemeinsam mit dem Aufnahmestutzen als einteiliges Befestigungselement auszubilden. Hierdurch kann eine feste Positionierung des Sicherungselements gegenüber dem Aufnahmestutzen auf besonders einfache Weise realisiert werden, so dass beim Aufstecken der Schlauchleitung auf den Aufnahmestutzen automatisch bzw. einhergehend eine Fixierung mittels des Sicherungselements erfolgt.

In weiterer Ausgestaltung der Erfindung ist das Befestigungselement einteilig mit dem Bauteil des Hausgeräts, insbesondere mit einem Bauteil einer Einspülschale einer Waschmaschine ausgebildet. Da das Befestigungselement somit integraler Bestandteil des Bauteils bzw. der Einspülschale selbst ist, lassen sich die Kosten für die Herstellung des Bauteils bzw. des Befestigungselements weiter minimieren.

Eine besonders sichere Festlegung der Schlauchleitung am Aufnahmestutzen lässt sich darüber hinaus erreichen, indem die Aufnahmeöffnung des Sicherungselements als Durchgangsöffnung ausgebildet ist. Demgemäß ist es somit möglich, die Schlauchleitung mit einem durch die Aufnahmeöffnung hindurch gesteckten Endabschnitt über das Sicherungselement überstehen zu lassen, wodurch sich eine besonders sichere und dichte Fixierung der Schlauchleitung am Aufnahmestutzen ergibt.

Eine besonders sichere Festlegung der Schlauchleitung am Aufnahmestutzen lässt sich darüber hinaus erreichen, indem die Durchgangsöffnung im Querschnitt kreisrund ausgebildet ist. Hierdurch kann mittels des Sicherungselements eine außenumfangsseitig äu-βerst gleichmäßige Kraft auf die vorzugsweise ebenfalls im Querschnitt kreisrunde Schlauchleitung ausgeübt werden.

In diesem Zusammenhang hat es sich als weiter vorteilhaft gezeigt, wenn die Durchgangsöffnung und der Aufnahmestutzen konzentrisch angeordnet sind, so dass sich ein gleich bleibender Durchführungsspalt zwischen dem Aufnahmestutzen und der Durchgangsöffnung des Sicherungselements ergibt, durch welchen die Schlauchleitung hindurchgeführt werden kann. Innerhalb des Durchführungsspalts zwischen dem Sicherungselement und dem Aufnahmestutzen wird die Schlauchleitung somit gleichmäßig eingeklemmt bzw. fixiert.

Eine weiter vorteilhafte Fixierung der Schlauchleitung am Aufnahmestutzen lässt sich erreichen, indem eine die Aufnahmeöffnung bildende Innenumfangswand des Sicherungselements an ihrem in Aufsteckrichtung der Schlauchleitung hinteren Ende einen parallel zum Aufnahmestutzen verlaufenden Wandbereich aufweist. Dieser parallel zum Aufnahmestutzen und somit auch parallel zur Außenumfangsseite der Schlauchleitung verlaufende Wandbereich der Innenumfangswand des Sicherungselements sorgt dabei für eine gleichmäßige Klemmkraft, welche auf die zwischen dem Sicherungselement und dem Aufnahmestutzen angeordnete Schlauchleitung ausgeübt wird.

Durch eine Haltewand, von welcher der Aufnahmestutzen absteht und welcher in einem Abstand zum Sicherungselement verläuft, kann auf einfache Weise ein Anschlag für ein gegenüber dem Sicherungselement überstehendes Ende der Schlauchleitung geschaffen werden. Durch dieses überstehende Ende ist eine besonders sichere Fixierung der Schlauchleitung an dem Aufnahmestutzen mittels des Sicherungselements möglich.

In weiterer Ausgestaltung der Erfindung steht der Aufnahmestutzen mit einem Ende gegenüber dem Sicherungselement ab. In diesem Bereich des Aufnahmestutzens kann somit auf einfache Weise eine Schlauchklemme befestigt werden, falls beispielsweise das Sicherungselement beschädigt worden ist. Gleichfalls als im Rahmen der Erfindung mitumfasst ist es zu betrachten, dass eine derartige Schlauchklemme zwischen der Haltewand des Aufnahmestutzens und dem Sicherungselement angeordnet wird. Ebenfalls ist es im Sinne der Erfindung, die Schlauchklemme zusätzlich zu dem Sicherungselement zu verwenden, um eine noch bessere Fixierung der Schlauchleitung am Aufnahmestutzen zu erreichen.

Schließlich hat es sich als vorteilhaft gezeigt, wenn das Befestigungselement aus einem Kunststoff-Material hergestellt ist. Ein derartiges Teil ist nicht nur fertigungstechnisch einfach und dementsprechend kostengünstig herzustellen, sondern darüber hinaus weist insbesondere das Sicherungselement die für die Fixierung der Schlauchleitung notwendige Flexibilität bzw. Elastizität auf.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in:

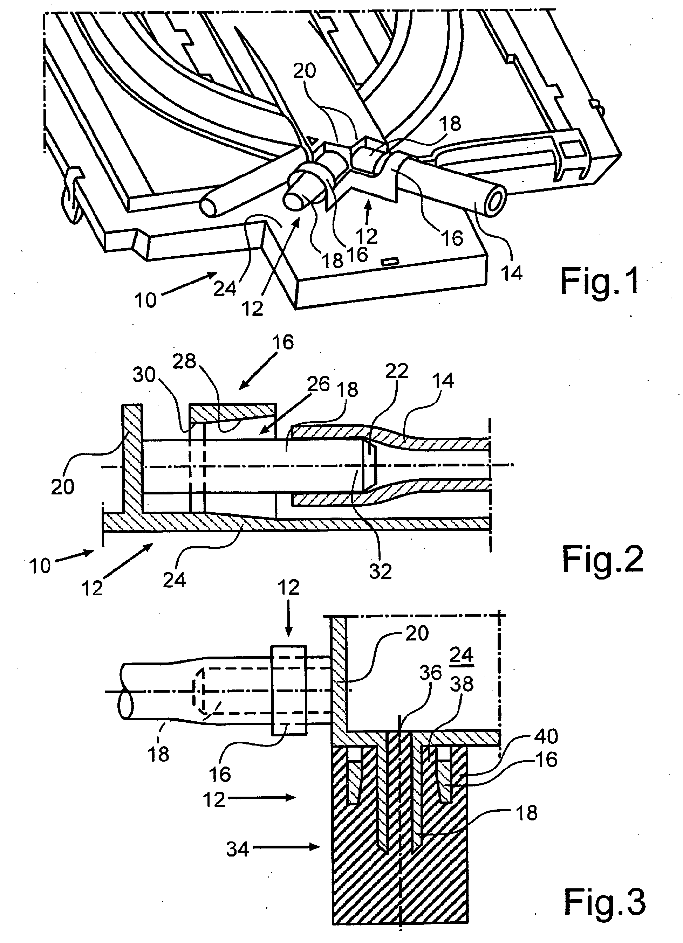

- Figur 1: eine schematische und ausschnittsweise Perspektivansicht auf ein Oberteil einer Einspülschale einer Waschmaschine mit vorliegend zwei Befestigungselementen, welche jeweils einen von einer Haltewand abstehenden Aufnahmestutzen umfassen, auf welchen eine in Figur 1 am rechten Aufnahmestutzen erkennbare wasserführende Schlauchleitung aufzustecken und mittels eines einteilig mit dem Befestigungselement und dem Aufnahmestutzen ausgebildeten jeweiligen Sicherungselement zu fixieren ist;
- Figur 2: eine schematische Seitenansicht auf eines der beiden teilweise aufgeschnitten dargestellten Befestigungselemente des Oberteils der Einspülschale der Waschmaschine, wobei die Schlauchleitung in einer teilweise auf dem Aufnahmestutzen aufgesteckten Position dargestellt ist, und wobei konzentrisch zu dem Aufnahmestutzen das Sicherungselement erkennbar ist, welches eine sich in Aufsteckrichtung der Schlauchleitung konisch verjüngende Aufnahmeöffnung umfasst; und in
- Figur 3: eine schematische und ausschnittsweise Draufsicht auf das Oberteil der Einspülschale der Waschmaschine gemäß Figur 1, wobei die beiden jeweils einen Aufnahmestutzen sowie ein Sicherungselement umfassenden Befestigungselemente für die jeweils zugehörige Schlauchleitung dargestellt sind, und wobei ein Schieber eines Werkzeugs zur Herstellung bzw. Ausbildung des unteren der beiden Befestigungselemente schematisch angedeutet ist.

In Figur 1 ist in einer schematischen und ausschnittsweisen Perspektivansicht ein Oberteil 10 einer Einspülschale einer Waschmaschine dargestellt. Das Oberteil 10 umfasst dabei zwei Befestigungselemente 12, an welchen auf im Weiteren noch näher erläuterte Weise jeweils eine wasserführende Schlauchleitung 14 festgelegt bzw. fixiert werden kann. Die Schlauchleitung 14 ist in Figur 1 am rechten der beiden Befestigungselemente 12 erkennbar.

In Zusammenschau mit Figur 2, welche in einer schematischen Seitenansicht bereichsweise aufgeschnitten eines der beiden Befestigungselemente 12 des Oberteils 10 der Einspülschale der Waschmaschine zeigt, wird dessen prinzipieller Aufbau erkennbar.

Das Befestigungselement 12 umfasst als wesentliche Bauteile ein Sicherungselement 16 sowie einen Aufnahmestutzen 18, welcher vorliegend von einer zugehörigen Haltewand 20 des Oberteils 10 absteht und einteilig mit dieser ausgebildet ist. Die Haltewand 20 bildet dabei auch eine Begrenzungswand des Oberteils 10 der Einspülschale der Waschmaschine. Zum leichten Aufschieben der Schlauchleitung 14 ist der Aufnahmestutzen 18 an seinem der Haltewand 20 abgewandten Ende mit einer Fase 22 versehen. Die Schlauchleitung 14 kann somit im vorliegenden Ausführungsbeispiel bis zum Anschlag an der Haltewand 20 auf den Aufnahmestutzen 18 aufgeschoben werden. Über die Schlauchleitung 14 und den hohl ausgebildeten Aufnahmestutzen 18 kann somit Frischwasser in die Einspülschale der Waschmaschine gelangen, um hierin bevorratetes Waschmittel in den nicht dargestellten Laugenbehälter der Waschmaschine mitzunehmen.

Das Sicherungselement 16, welches einteilig mit einer unteren Begrenzungswand 24 des Befestigungselements 14 bzw. des Oberteils 10 der Einspülschale 10 ausgebildet ist, umfasst eine Aufnahmeöffnung 26, welche konisch ausgebildet ist und sich in Aufsteckrichtung der Schlauchleitung 14 im Querschnitt verjüngt. Demgemäß ist das Sicherungselement 16 vorliegend im Wesentlichen als ringförmiges Teil ausgebildet, welche eine als Durchgangsöffnung ausgebildete und im Querschnitt im Wesentlichen kreisrunde Aufnahmeöffnung 26 umfasst. Die Aufnahmeöffnung 26 ist dabei konzentrisch zum Aufnahmestutzen 18 ausgebildet, der seinerseits außenumfangsseitig ebenfalls im Querschnitt kreisrund ausgebildet ist.

Eine die Aufnahmeöffnung 26 bildende Innenumfangswand 28 des Sicherungselements 16 umfasst dabei in Aufsteckrichtung der Schlauchleitung 14 an ihrem hinteren Ende einen parallel zum Aufnahmestutzen 18 verlaufenden Wandbereich 30. Mit anderen Worten verläuft die Aufnahmeöffnung 26 in Aufsteckrichtung der Schlauchleitung 14 zunächst sich konisch verjüngend bis zu dem Wandbereich 60, in welchem die Aufnahmeöffnung 26 dann einen konstanten Querschnitt aufweist.

Insbesondere aus Figur 2 ist erkennbar, dass die Aufnahmeöffnung 26 auf der der Schlauchleitung 14 zugewandten Seite so ausgebildet ist, dass diese sicher und zuverlässig in die Aufnahmeöffnung 26 des Sicherungselements 16 eingeführt werden kann. Mit anderen Worten ist die Aufnahmeöffnung 26 auf der der Schlauchleitung 14 zugewandten Seite im Querschnitt größer bemessen als die auf den Aufnahmestutzen 18 aufgesteckte Schlauchleitung 14. Im weiteren Verlauf des Aufschiebens der Schlauchleitung 14 auf den Aufnahmestutzen 18 kommt dann das vordere Ende der Schlauchleitung 14 mit seinem Außenumfang in Kontakt mit der die Aufnahmeöffnung 26 umfangsseitig begrenzenden Innenumfangswand 28 des Sicherungselements 16. Dieser Kontakt erfolgt vorzugsweise in einem - bezogen auf die Aufsteckrichtung der Schlauchleitung 14 - vorderen bis mittleren Bereich der Aufnahmeöffnung 26 des Sicherungselements 16. Im weiteren Verlauf des Aufschiebens wird dann die Schlauchleitung 14 durch die sich weiter verjüngende Innenumfangswand 28 des Sicherungselements 16 mit einer Klemmkraft beaufschlagt und gegen den Aufnahmestutzen 18 gepresst. Mit anderen Worten ist also in einem - bezogen auf die Aufsteckrichtung der Schlauchleitung 14 - hinteren Bereich des Sicherungselements 16 die Aufnahmeöffnung 26 im Querschnitt kleiner bemessen als die auf den Aufnahmestutzen 18 aufgesteckte Schlauchleitung 14. Durch die sich konisch verjüngende Ausgestaltung der Aufnahmeöffnung 26 ist dabei sichergestellt, dass die mittels der Innenumfangswand 28 auf die Schlauchleitung 14 ausgeübte Klemmkraft kontinuierlich ansteigt.

Durch den sich parallel zum Aufnahmestutzen 18 erstreckenden Wandbereich 30 am - bezogen auf die Aufsteckrichtung der Schlauchleitung 14 - hinteren Ende des Sicherungselements 16 wird dabei eine zuverlässige außenumfangsseitige Festlegung und Führung der geklemmten Schlauchleitung 14 erreicht. Diese kann gegebenenfalls weitergeschoben werden, bis sie den durch die Haltewand 20 gebildeten Anschlag erreicht. Es ist erkennbar, dass durch die außenumfangsseitig des Aufnahmestutzens 18 angeordnete und sich in Richtung der Haltewand 20 konisch verjüngende Innenumfangswand 28 eine besonders sichere Festlegung der Schlauchleitung 14 an dem Aufnahmestutzen 18 realisieren lässt. Durch die vom Sicherungselement 16 ausgeübte Klemmkraft wird darüber hinaus eine Abdichtung der Schlauchleitung 14 gegenüber dem Aufnahmestutzen 18 erreicht.

Der Aufnahmestutzen 18 steht mit einem Ende 32 gegenüber dem Sicherungselement 16 auf der der Haltewand 20 gegenüber liegenden Seite über. Hierdurch ist es möglich, bei einem beschädigten Sicherungselement 16 zusätzlich eine Schlauchklemme zu positionieren, mit welchem die Schlauchleitung 14 am Ende 32 des Aufnahmestutzens 18 festzulegen ist. Eine derartige Schlauchklemme kann auch zusätzlich zu dem Sicherungselement 16 verwendet werden, um eine besonders zuverlässige Festlegung der Schlauchleitung 14 am Aufnahmestutzen 18 zu erreichen. Auch in diesem Fall bietet jedoch das Sicherungselement 16 den Vorteil, dass die Schlauchleitung 14 zunächst auf einfache Weise am Befestigungselement 12 festgelegt werden kann, bevor die zusätzliche Schlauchklemme positioniert wird. Das Befestigungselement 12 mit dem Aufnahmestutzen 18 und dem Sicherungselement 16 ist gemeinsam mit dem Oberteil 10 der Einspülschale 10 vorzugsweise aus einem Kunststoff gestaltet, der eine entsprechende Flexibilität bzw. Elastizität aufweist, um sich an die aufgesteckte Schlauchleitung 14 anzupassen.

Schließlich sind in Figur 3 in einer schematischen Draufsicht auf die ausschnittsweise erkennbare Oberschale 10 gemäß Figur 1 die beiden Befestigungselemente 12 zur Festlegung jeweils einer zugehörigen Schlauchleitung 14 erkennbar, wobei die Schlauchleitung 14 am linken bzw. oberen Schlauchstutzen in ihrer festgelegten Position dargestellt ist. Weiter ist in Figur 3 ein Schieber 34 eines Werkzeugs zur Herstellung des Befestigungselements 12 bzw. der Oberschale 10 in einem Kunststoffspritzgussverfahren dargestellt, mit dem verdeutlicht werden soll, in welcher Weise die einteilig mit der Oberschale 10 verbundenen Aufnahmestutzen 18 bzw. Sicherungselemente 16 gefertigt werden können. Dabei ist erkennbar, dass durch ein zentrales Schieberteil 36 eine Durchgangsöffnung innerhalb des Aufnahmestutzens 18 ausgebildet werden kann. Darüber hinaus ist erkennbar, dass durch ein im Querschnitt ringförmiges bzw. insgesamt rohrförmiges weiteres Schieberteil 38 die konische Aufnahmeöffnung 26 erzeugt werden kann. Das Sicherungselement 28 ist dann außenumfangsseitig durch ein im Querschnitt ebenfalls ringförmiges bzw. insgesamt rohrförmiges Schieberteil 40 zu fertigen.

## Patentansprüche

1. Befestigungsanordnung für eine Schlauchleitung (14) an einem Bauteil (Oberteil 10) eines Hausgerätes mit einem Aufnahmestutzen (18), auf welchen die Schlauchleitung (14) aufzustecken ist, und mit einem Sicherungselement (16), welches außenumfangseitig der aufgesteckten Schlauchleitung (14) zur Fixierung gegenüber dem Aufnahmestutzen (18) anzuordnen ist, **dadurch gekennzeichnet, dass** eine der Schlauchleitung (14) zugewandte Aufnahmeöffnung (26) des Sicherungselements (16) konisch ausgebildet ist und sich in Aufsteckrichtung der Schlauchleitung (14) im Querschnitt verjüngt.

2. Befestigungsanordnung nach Anspruch 1, **dadurch gekennzeichnet, dass** der Aufnahmestutzen (18) und das Sicherungselement (16) als einteiliges Befestigungselement (12) ausgebildet sind.

3. Befestigungsanordnung nach Anspruch 2, **dadurch gekennzeichnet, dass** das Befestigungselement (12) einteilig mit dem Bauteil des Hausgerätes, insbesondere mit einem Bauteil (Oberteil 10) einer Einspülschale eines Waschmaschine ausgebildet ist.

4. Befestigungsanordnung nach einem der vorhergehenden Ansprüche, **dadurch gekennzeichnet, dass** die Aufnahmeöffnung (26) des Sicherungselements als Durchgangsöffnung ausgebildet ist.

5. Befestigungsanordnung nach einem der vorhergehenden Ansprüche, **dadurch gekennzeichnet, dass** die Aufnahmeöffnung (26) im Querschnitt kreisrund ausgebildet ist.

6. Befestigungsanordnung nach einem der vorhergehenden Ansprüche, **dadurch gekennzeichnet, dass** die Aufnahmeöffnung (26) und der Aufnahmestutzen (18) konzentrisch angeordnet sind.

7. Befestigungsanordnung nach einem der vorhergehenden Ansprüche, **dadurch gekennzeichnet, dass** eine die Aufnahmeöffnung (26) bildende Innenumfangswand (28) des Sicherungselements (16) an ihrem in Aufsteckrichtung der Schlauchleitung (14) hinteren Ende einen parallel zum Aufnahmestutzen (18) verlaufenden Wandbereich (30) aufweist.

8. Befestigungsanordnung nach einem der vorhergehenden Ansprüche, **dadurch gekennzeichnet, dass** der Aufnahmestutzen (18) von einer zugehörigen Haltewand (20) absteht, die in einem Abstand zum Sicherungselement (16) verläuft.

9. Befestigungsanordnung nach einem der vorhergehenden Ansprüche, **dadurch gekennzeichnet, dass** der Aufnahmestutzen (18) mit einem Ende (32) gegenüber dem Sicherungselement (16) übersteht.

10. Befestigungsanordnung nach einem der vorhergehenden Ansprüche, **dadurch gekennzeichnet, dass** des Befestigungselement (12) aus einem Kunststoff hergestellt ist.

## Claims

1. Fastening arrangement for a hose duct (14) at a component (upper part 10) of a domestic appliance with a receiving stub-pipe (18), onto which the hose duct (14) is to be plugged, and with a securing element (16), which is to be arranged at the outer circumference of the plugged-on hose duct (14) for fixing relative to the receiving stub-pipe (18), **characterised in that** a receiving opening (26), which faces the hose duct (14), of the securing element (16) is of conical form and narrows in cross-section in plug-on direction of the hose duct (14).

2. Fastening arrangement according to claim 1, **characterised in that** the receiving stub pipe (18) and the securing element (16) are constructed as an integral fastening element (12).

3. Fastening arrangement according to claim 2, **characterised in that** the fastening element (12) is formed integrally with the component of the domestic appliance, particularly with a component (upper part 10) of a flushing-in tray of a washing machine.

4. Fastening arrangement according to any one of the preceding claims, **characterised in that** the receiving opening (26) of the securing element is formed as a passage opening.

5. Fastening arrangement according to any one of the preceding claims, **characterised in that** the receiving opening (26) is formed to be circularly round in cross-section.

6. Fastening arrangement according to any one of the preceding claims, **characterised in that** the receiving opening (26) and the receiving stub-pipe (18) are arranged concentrically.

7. Fastening arrangement according to any one of the preceding claims, **characterised in that** an inner circumferential wall (28), which forms the receiving opening (26), of the securing opening (16) has at its end rearward in plug-on direction of the hose duct (14) a wall region (30) extending parallel to the receiving stub pipe (18).

8. Fastening arrangement according to any one of the preceding claims, **characterised in that** the receiving stub-pipe (18) protrudes from an associated retaining wall (20) extending at a spacing from the securing element (16).

9. Fastening arrangement according to any one of the preceding claims, **characterised in that** the receiving stub-pipe (18) protrudes by an end (32) relative to the securing element (16).

10. Fastening arrangement according to any one of the preceding claims, **characterised in that** the fastening element (12) is made of a plastics material.

## Revendications

1. Agencement de fixation pour une conduite souple (14) sur un composant (partie supérieure 10) d'un appareil ménager, comprenant un embout récepteur (18) sur lequel la conduite souple (14) doit être emboîtée, et un élément de sécurité (16) destiné à être placé sur la périphérie extérieure de la conduite souple (14) emboîtée pour assurer la fixation par rapport à l'embout récepteur (18), **caractérisé en ce qu'**une ouverture de réception (26) de l'élément de sécurité (16) tournée vers la conduite souple (14) est conçue de manière conique et sa section transversale se rétrécit dans le sens d'emboîtement de la conduite souple (14).

2. Agencement de fixation selon la revendication 1, **caractérisé en ce que** l'embout récepteur (18) et l'élément de sécurité (16) sont conçus sous forme d'élément de fixation (12) d'un seul tenant.

3. Agencement de fixation selon la revendication 2, **caractérisé en ce que** l'élément de fixation (12) est conçu d'un seul tenant avec le composant de l'appareil ménager, en particulier avec un composant (partie supérieure 10) d'un bac de distribution d'un lave-linge.

4. Agencement de fixation selon l'une des revendications précédentes, **caractérisé en ce que** l'ouverture de réception (26) de l'élément de sécurité est conçue sous forme d'ouverture de passage.

5. Agencement de fixation selon l'une des revendications précédentes, **caractérisé en ce que** l'ouverture de réception (26) est de section circulaire.

6. Agencement de fixation selon l'une des revendications précédentes, **caractérisé en ce que** l'ouverture de réception (26) et l'embout récepteur (18) sont disposés concentriquement.

7. Agencement de fixation selon l'une des revendications précédentes, **caractérisé en ce qu'**une paroi périphérique intérieure (28) de l'élément de sécurité (16), laquelle forme l'ouverture de réception (26), présente à son extrémité arrière dans le sens d'emboîtement de la conduite souple (14), une zone de paroi (30) qui s'étend parallèlement à l'embout récepteur (18).

8. Agencement de fixation selon l'une des revendications précédentes, **caractérisé en ce que** l'embout récepteur (18) fait saillie d'une paroi associée de maintien (20), laquelle s'étend à distance de l'élément de sécurité (16).

9. Agencement de fixation selon l'une des revendications précédentes, **caractérisé en ce que** l'embout récepteur (18) déborde avec une extrémité (32) par rapport à l'élément de sécurité (16).

10. Agencement de fixation selon l'une des revendications précédentes, **caractérisé en ce que** l'élément de fixation (12) est réalisé en matière plastique.
